Europäisches Patentamt

(19) European Patent Office

Office européen des brevets

(11) Numéro de publication : **0 188 943**
**B1**

(12) # FASCICULE DE BREVET EUROPÉEN

(45) Date de publication du fascicule du brevet :
20.09.89

(21) Numéro de dépôt : 85402507.9

(22) Date de dépôt : 16.12.85

(51) Int. Cl.⁴ : **G 11 B 5/127**, G 11 B 5/265,
G 11 B 5/00, G 11 B 5/02//
G11B5/09, G11B5/31

(54) Transducteur magnétique d'écriture pour enregistrement transversal.

(30) Priorité : 20.12.84 FR 8419512

(43) Date de publication de la demande :
30.07.86 Bulletin 86/31

(45) Mention de la délivrance du brevet :
20.09.89 Bulletin 89/38

(84) Etats contractants désignés :
DE FR GB IT NL

(56) Documents cités :
DE–B– 1 023 603
DE–B– 1 222 539
DE–B– 1 270 657
DE–C– 612 489
DE–C– 663 974
GB–A– 1 499 773
PATENTS ABSTRACTS OF JAPAN, vol. 6, no. 225 (P-154) [1103], 10 novembre 1982; & JP - A - 57 127 913 (FUJITSU K.K.) 09.08.1982
IBM TECHNICAL DISCLOSURE BULLETIN, vol. 15, no. 1, juin 1972, pages 328-329, New York, US; F.B. SHELLEDY: "Write wide/read narrow-tunnel erase magnetic head"
PATENTS ABSTRACTS OF JAPAN, vol. 3, no. 31 (E-98), 16 mars 1979, page 155 E 98; & JP - A - 54 11 710 (NIPPON DENKI K.K.), 29.01.1979
PATENTS ABSTRACTS OF JAPAN, vol. 3, no. 31 (E-98), 16 mars 1979, page 154 E 98; & JP - A - 54 11 709 (NIPPON DENKI K.K.) 29.01.1979
IEEE TRANSACTIONS ON MAGNETICS, vol. MAG-8, no. 2, juin 1972; pages 194-200, New York, US; G.F. SAUTER et al.: "Transverse recording using thin film recording heads"

(73) Titulaire : BULL S.A.
121, Avenue de Malakoff
F-75116 Paris (FR)

(72) Inventeur : Desserre, Jacques
12 Bis rue de la Mairie Orcemont
F-78120 Rambouillet (FR)

(74) Mandataire : Gouesmel, Daniel et al
BULL S.A. Industrial Property Department 25 avenue de la Grande-Armée GA-4X018
F-75016 Paris (FR)

## Description

La présente invention concerne un transducteur magnétique d'écriture pour enregistrement transversal. Elle est notamment applicable à l'enregistrement d'informations à hautes densités linéique et radiale sur les disques magnétiques des mémoires à disques.

Les disques magnétiques contiennent des informations écrites à l'intérieur de pistes concentriques circulaires. Elles ont la forme d'une succession de petites cellules magnétiques de longueur généralement variable, répartis sur toute la longueur de chaque piste. La magnétisation (ou l'aimantation) dans deux cellules magnétiques élémentaires consécutives est de sens opposé et a généralement même module.

On appelle transducteur les moyens qui permettent soit d'écrire les informations sur les disques magnétiques, soit de les lire, soit de réaliser l'une et l'autre de ces deux fonctions.

Les transducteurs magnétiques comprenant un circuit magnétique autour duquel est disposé un enroulement sont communément utilisés aussi bien à l'écriture qu'à la lecture. Le circuit magnétique comprend généralement deux pièces polaires séparées par un entrefer lequel est disposé à une distance très faible de la face du support (entre 0 et quelques dixièmes de microns). Celle des deux pièces polaires qui la première dans le temps voit défiler devant elle les informations du support magnétique est appelée pièce polaire amont ou encore pièce polaire avant, alors que l'autre pièce polaire est appelée pièce polaire aval ou pièce polaire arrière.

La tendance actuelle du développement des disques magnétiques est de chercher à obtenir des densités radiales de quelques milliers de pistes par centimètre (mesurées suivant le diamètre des disques) et des densités linéiques égales ou supérieures à dix mille changements de sens de magnétisation par centimètre (mesurées suivant la circonférence des pistes).

L'un des modes d'écriture d'informations permettant l'obtention de telles densités d'enregistrement est le mode d'écriture dit transversal où l'aimantation dans les cellules élémentaires est située dans le plan de la couche magnétique d'enregistrement du disque (c'est-à-dire parallèlement à ce dernier) et est perpendiculaire au sens de défilement des informations (d'où le nom de mode d'enregistrement transversal). Dans ce mode, le milieu magnétique constituant la couche est de préférence un milieu magnétique anisotrope qui présente une direction privilégiée de magnétisation (ou d'aimantation) appelée encore direction de facile aimantation, contenue dans le plan de la couche d'enregistrement et perpendiculaire au sens de défilement des informations. Pour un disque magnétique, en tout point, cette direction est radiale et l'aimantation dans les cellules est donc dirigée suivant un diamètre du disque.

Sur le support d'enregistrement, chaque cellule élémentaire d'une piste donnée est séparée de chacune de ses voisines par une transition magnétique (en fait une paroi de Bloch ou de Néel, lieu géométrique des points séparant deux cellules élémentaires voisines d'aimantation opposée, marquant l'inversion du sens d'aimantation dans ces cellules) dite transition principale dont la direction qui est celle du diamètre du disque est perpendiculaire au sens de défilement des informations. Sur le support, chaque transition principale définit physiquement une information binaire.

Plus généralement, on définit une transition magnétique comme la frontière géographique entre des cellules magnétiques d'aimantation opposée.

Pour écrire les informations dans un tel mode, on utilise habituellement un système d'enregistrement composé d'un transducteur magnétique dont l'entrefer est disposé perpendiculairement au sens de défilement des informations et d'un support d'enregistrement du type décrit au paragraphe ci-dessus (disque magnétique anisotrope à direction de facile aimantation radiale, par exemple).

Le champ magnétique d'écriture utilisé est la composante du champ magnétique produit par la pièce polaire arrière, composante parallèle au support d'enregistrement et perpendiculaire au sens de défilement des informations.

On montre que le système et le mode d'enregistrement décrits ci-dessus permettent d'obtenir des transitions magnétiques séparant les cellules magnétiques successives de chaque piste, définies de façon très précise et présentant une stabilité élevée. On montre par ailleurs que chaque transition est d'autant plus fine (sa longueur mesurée parallèlement au sens de défilement des informations est d'autant plus faible) que l'épaisseur de la couche d'enregistrement est faible.

Pour pouvoir lire les informations enregistrées selon le mode transversal, il est nécessaire que chacune des cellules magnétiques émette au voisinage immédiat du support d'enregistrement un champ magnétique de fuite d'intensité suffisante afin qu'un transducteur de lecture délivre un signal qui soit exploitable par les circuits électroniques de lecture qui lui sont associés.

Or, du fait même de la nature de l'enregistrement transversal, il n'y a pas de champ magnétique de fuite produit au droit des transitions principales, au voisinage de la surface du support. En effet autour de ces transitions, les lignes de champ magnétique entre deux cellules voisines ont tendance à se refermer dans le plan même du support et non à l'extérieur de celui-ci.

Pour que les cellules magnétiques d'une piste émettent un champ magnétique de fuite au voisinage de la surface du support permettant de détecter leur emplacement, chacune d'entre elles doit donc comporter sur chacun de ses côtés parallèle au sens de défilement des informations une transition latérale, à savoir une transition parallèle au sens de défilement des informations. Cela signifie qu'une cellule d'une piste donnée doit être entourée de part et d'autre de la piste de cellules magnétiques dont l'aimantation est opposée à la sienne.

En d'autres termes, seules les cellules magnétiques munies de deux transitions latérales, disposées de la manière indiquée ci-dessus, produiront au voisinage immédiat du support d'enregistrement un champ magnétique de fuite d'intensité suffisante pour produire un signal de lecture exploitable aux bornes d'un transducteur magnétorésistant de lecture.

En conclusion, pour les cellules magnétiques d'une piste donnée, alors que les transitions principales permettent de définir l'emplacement géographique des informations binaires sur le disque, ce sont les transitions latérales qui permettent leur détection par un transducteur de lecture.

L'inconvénient du système et du mode d'enregistrement habituels décrits ci-dessus réside en ce que la cartographie du champ magnétique de fuite généré par les informations enregistrées est fortement dépendante de l'état magnétique initial de la piste qu'on cherche à enregistrer et de son environnement magnétique immédiat, (ce dernier étant défini par une zone de largeur limitée qui est située de part et d'autre des bords de la piste).

En effet, l'état magnétique initial de la piste et de son environnement magnétique immédiat est tout à fait aléatoire ce qui peut avoir l'une des trois conséquences suivantes :

a) une cellule magnétique enregistrée est munie sur chacun de ses côtés parallèles au sens de défilement des informations, d'une transition latérale auquel cas, le signal de sortie du transducteur de lecture est exploitable,

b) la cellule magnétique enregistrée est munie, sur un seul de ses côtés, d'une transition latérale, auquel cas le champ magnétique de fuite produit est relativement faible et le signal de sortie du transducteur magnétorésistant de lecture est faible et difficilement exploitable,

c) le domaine magnétique enregistré ne comporte aucune transition latérale sur chacun de ses côtés, auquel cas, le champ magnétique de fuite produit est quasiment nul et le signal de sortie du transducteur magnétorésistant de lecture nul également.

L'ensemble des signaux de lecture correspondant à une piste donnée comportera donc deux types de signaux :

1) des signaux d'amplitude suffisante pour permettre de déterminer la valeur des informations correspondantes, (cas a) ci-dessus),

2) des signaux d'amplitude faible voire nulle rendant la détermination de la valeur des bits soit incertaine, soit impossible (cas b) et c) ci-dessus).

L'exploitation du signal correspondant à l'ensemble des domaines magnétiques enregistrés sur une piste donnée sera donc extrêmement difficile. On connaît du document allemand DE-C-663974 un transducteur magnétique permettant d'enregistrer transversalement des informations sur une pluralité de pistes d'un support, qui comprend une pièce polaire magnétique centrale entourée de deux pièces polaires latérales. La pièce polaire centrale est séparée de chacune des pièces polaires latérales par un entrefer. Un tel transducteur permet d'écrire deux transitions principales de sens opposé séparées par une seule transition latérale. Pour écrire une piste d'enregistrement sur un disque magnétique, il faut donc écrire successivement chacune des transitions latérales. L'écriture d'une piste magnétique demande donc deux opérations successives, le transducteur étant déplacé d'une distance égale à la largeur de la piste pour passer d'une opération à l'autre. La durée d'écriture d'une piste est donc relativement longue d'une part, et d'autre part la largeur de la piste décrite dépend de la précision avec laquelle le transducteur est déplacé pour passer d'une opération d'écriture à l'autre.

La présente invention permet de remédier à l'inconvénient mentionné ci-dessus, en écrivant les deux transitions latérales entourant une transition principale en une seule opération, la largeur de la piste écrite étant uniquement fonction des dimensions du transducteur d'écriture.

La présente invention permet de remédier à l'inconvénient ci-dessus.

Selon l'invention, le transducteur magnétique pour enregistrer des informations sur une pluralité de pistes d'un support, les informations de chaque piste se présentant sous la forme d'une pluralité de cellules magnétiques dont le vecteur aimantation est sensiblement parallèle au plan du support en étant perpendiculaire au sens de défilement, comprenant :

un circuit magnétique formé de plusieurs pièces polaires d'écriture, couplées magnétiquement à un bobinage, est caractérisé en ce que les pièces polaires d'écriture sont composées d'un dipôle central disposé entre deux dipôles auxiliaires latéraux situés de part et d'autre du dipôle central selon une direction perpendiculaire au sens de défilement du support et parallèle à son plan, chacun des deux dipôles auxiliaires latéraux étant séparés du dipôle central par un entrefer, le champ magnétique produit par le dipôle central d'une part et les champs magnétiques produits par les dipôles latéraux d'autre part étant antiparallèles au niveau du support de sorte que le dipôle central enregistre chaque cellule dite centrale d'une piste donnée avec un sens d'aimantation donné, les dipôles auxiliaires enregistrant de part et d'autre de cette cellule deux cellules latérales dont l'aimantation est parallèle et de même sens et est opposée à celle de la cellule centrale, les deux entrefers définissant ainsi deux transitions magnétiques latérales parallèles au sens de défilement des informations, disposées aux deux extrémités de la cellule centrale.

Ainsi les deux entrefers entre la pièce polaire centrale et les deux pièces polaires auxiliaires latérales permettent de définir pour chaque cellule élémentaire des transitions magnétiques laté-

rales, ce qui rend en tout occasion les informations enregistrées sur chaque piste, exploitables par les transducteurs de lecture et leurs circuits électroniques de lecture associés.

D'autres caractéristiques et avantages de la présente invention apparaîtront à la lecture de la description suivante donnée à titre d'exemple, purement illustratif et nullement limitatif, en se référant aux dessins annexés, sur lesquels :

la figure 1 montre, sous forme de schéma simplifié, un système d'enregistrement transversal selon le brevet 2.068.884 précité,

la figure 1a représentant un système d'enregistrement où le transducteur est un transducteur magnétique de type classique en ferrite,

la figure 1b montrant un système d'enregistrement où le transducteur magnétique d'enregistrement est un transducteur intégré,

la figure 2 montre les inconvénients du système d'enregistrement transversal selon l'art antérieur montré à la figure 1,

la figure 3 est un schéma de principe simplifié vu de face selon une direction parallèle au sens de défilement des informations, d'un transducteur magnétique pour enregistrement transversal, selon l'invention,

la figure 4 composée des figures 4a, 4b, et 4c montre comment l'on peut disposer les différents conducteurs constituant le bobinage du transducteur magnétique pour enregistrement transversal selon l'invention montré à la figure 3,

la figure 4a étant une vue de face prise selon une direction parallèle au sens de défilement des informations,

les figures 4b et 4c montrant une vue en coupe dans un plan perpendiculaire au support d'enregistrement et parallèle au sens de défilement des informations, d'un bobinage pour transducteur pour enregistrement transversal selon l'invention,

les figures 5 et 6 sont des vues de trois quarts en perspective montrant un mode de réalisation préféré d'un transducteur magnétique pour enregistrement transversal selon l'invention,

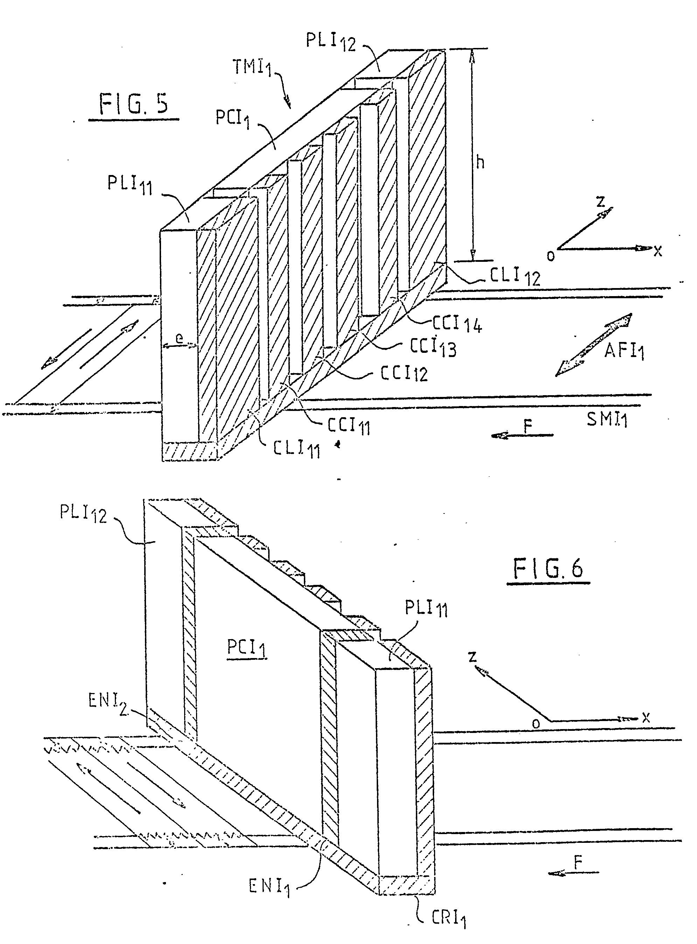

la figure 5 montrant plus particulièrement la disposition relative du bobinage par rapport aux pôles central et latéraux du transducteur selon l'invention,

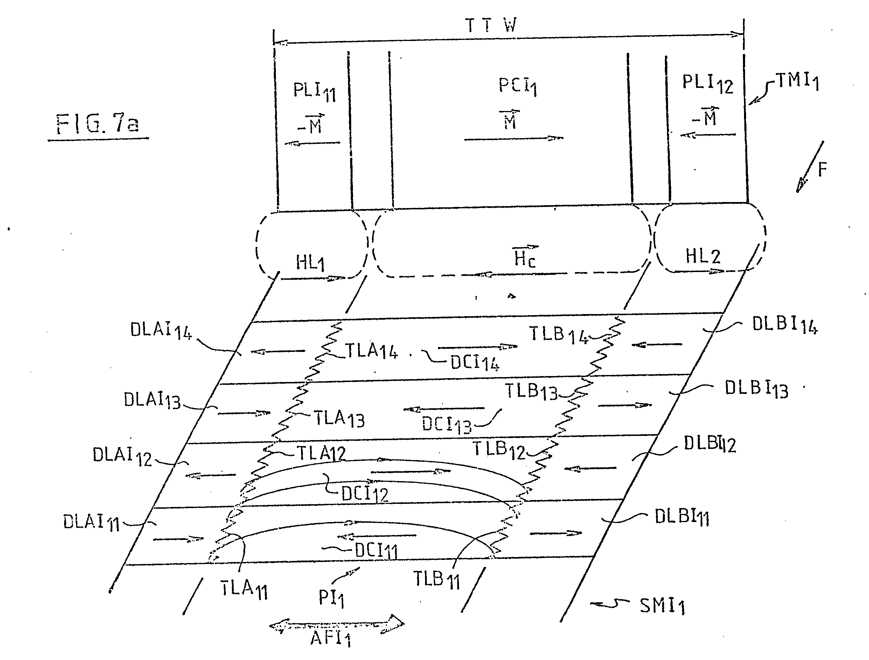

la figure 6 montrant plus particulièrement la disposition relative des pièces polaires centrale et latérale les unes par rapport aux autres,

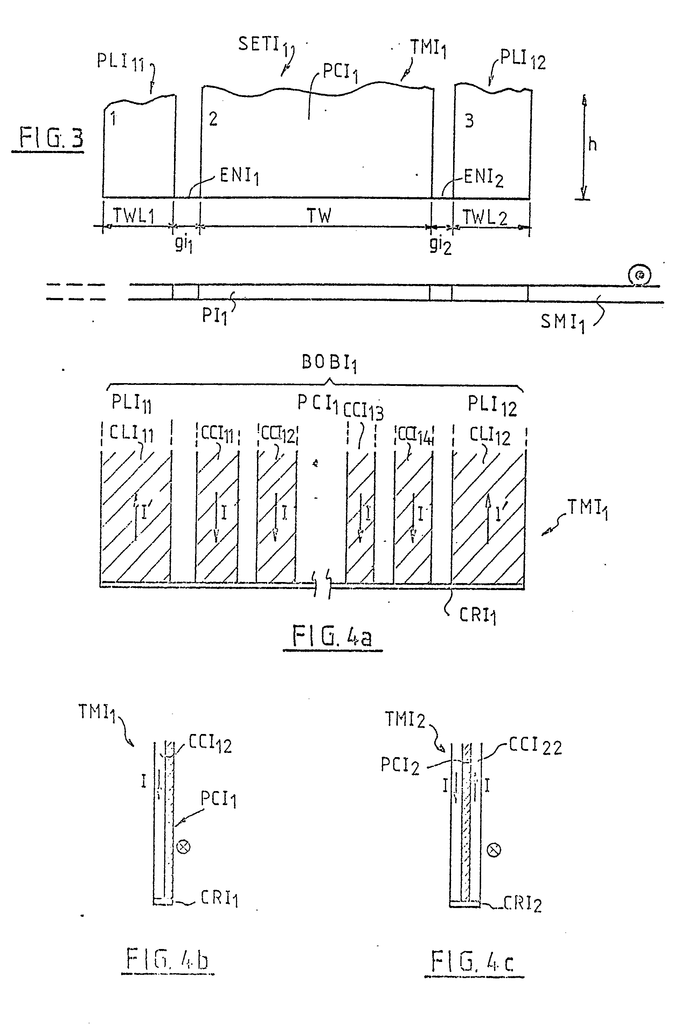

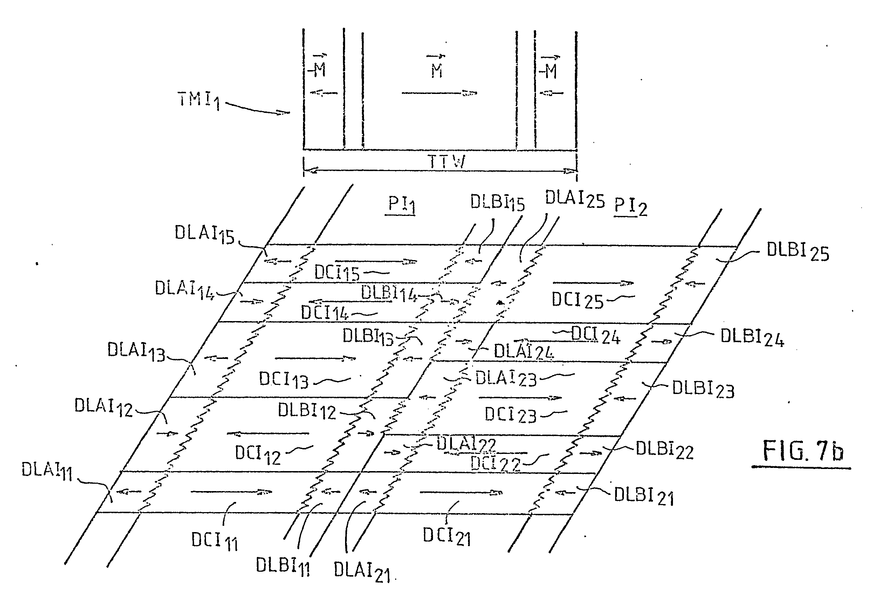

la figure 7 montre comment sont enregistrées les informations sur un support d'enregistrement par le transducteur magnétique selon l'invention montré aux figures 3 à 6,

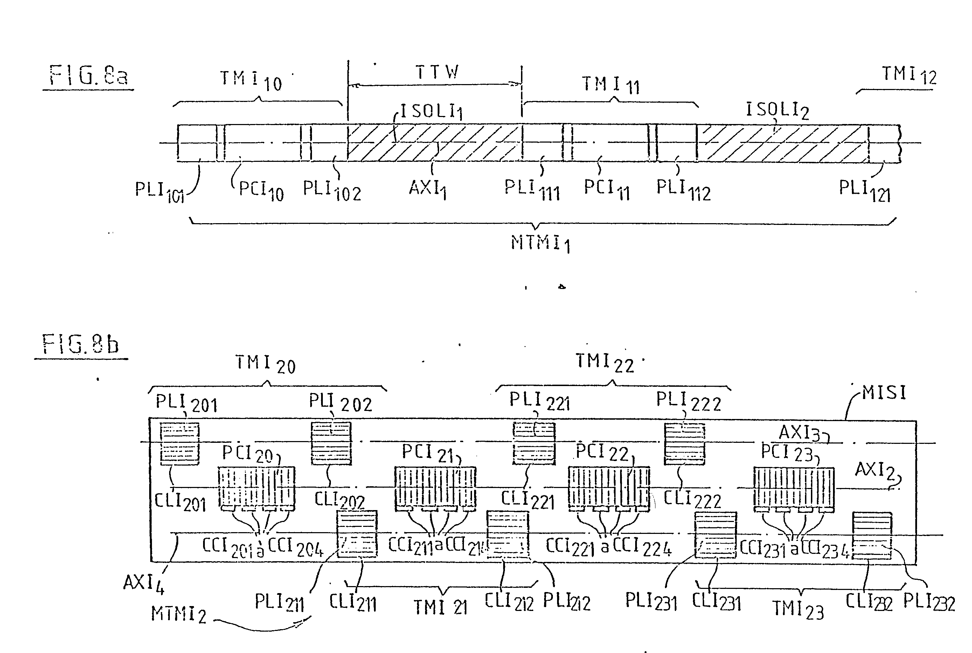

la figure 8 composée des figures 8a et 8b, montre, vues de dessus, deux têtes d'écriture comportant une pluralité de transducteurs selon l'invention tels que montrés sur les figures 3 à 6.

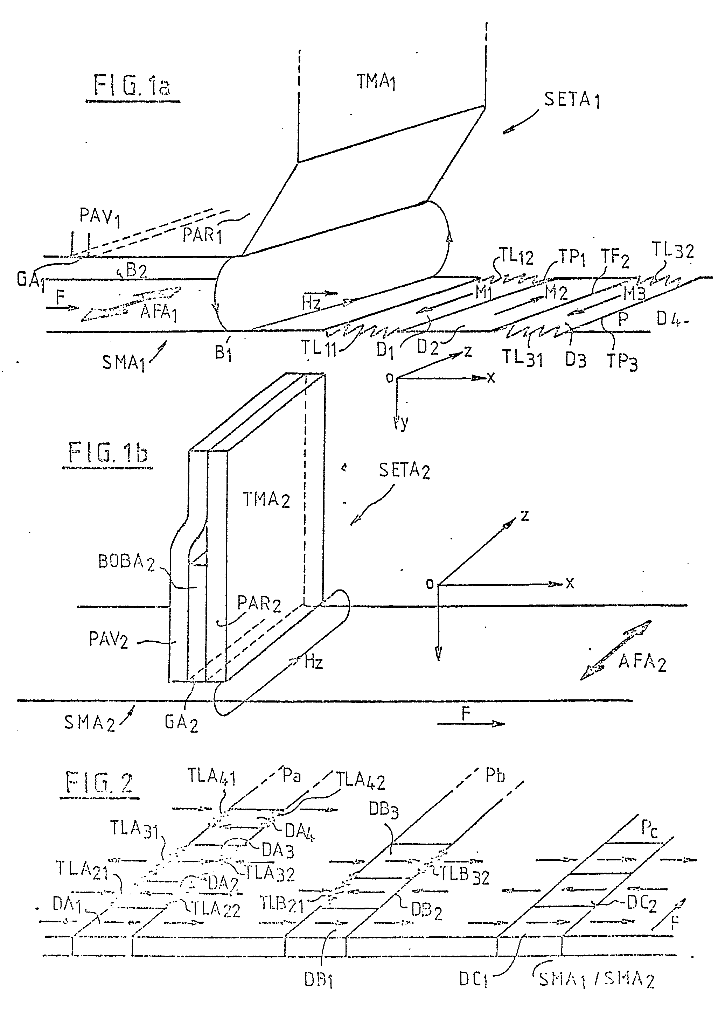

Afin de mieux comprendre comment est constitué et comment fonctionne le transducteur magnétique d'écriture selon l'invention, il est utile de faire quelques rappels sur la constitution et le fonctionnement des transducteurs magnétiques d'écriture transversale d'informations selon l'art antérieur et sur leurs inconvénients. Ces rappels sont illustrés par les figures 1a, 1b, 2, les figures 1a et 1b montrant deux systèmes d'enregistrement transversal incorporant deux transducteurs magnétiques selon l'art antérieur, la figure 2 montrant les inconvénients de tels systèmes d'enregistrement.

On considère la figure 1a qui montre un système d'enregistrement transversal $SETA_1$ selon l'art antérieur.

Ce système $SETA_1$ comprend :
un transducteur magnétique $TMA_1$,
un support d'enregistrement $SMA_1$ qui défile devant le transducteur $TMA_1$ dans le sens indiqué par la flèche F.

Le transducteur $TMA_1$ montré à la figure 1a est un transducteur magnétique de type classique par exemple réalisé en ferrite, et comporte une pièce polaire avant $PAV_1$ et une pièce polaire arrière $PAR_1$, séparées par un entrefer $GA_1$.

Le support d'enregistrement $SAM_1$ dont on n'a représenté qu'une seule piste P, est réalisé en un matériau magnétique anisotrope qui présente une direction de facile aimantation $AFA_1$ perpendiculaire au sens de défilement F des informations et contenue dans le plan du support d'enregistrement $SMA_1$. L'épaisseur de la couche magnétique de ce dernier est très faible et de l'ordre de quelques entre 200 Å et 1 μ.

Pour produire les informations de la piste P, on enregistre au moyen de la pièce polaire arrière $PAR_1$ du transducteur $TMA_1$ grâce à la composante de champ $H_z$ produite par la pièce polaire arrière $PAR_1$ (on repère le système d'enregistrement $SETA_1$ grâce à un système d'axes rectangulaires Ox, Oy, Oz comme indiqué aux figures 1a et 1b) une succession de cellules magnétiques dont trois seulement sont représentées pour simplifier la figure 1a, à savoir les cellules magnétiques $D_1$, $D_2$, $D_3$. L'aimantation dans chacune d'entre elles représentée par les vecteurs $M_1$, $M_2$, $M_3$ est transversale, c'est-à-dire perpendiculaire au sens de défilement F des informations (perpendiculaire à l'axe Ox) et parallèle à l'axe Oz. Lorsque le support d'enregistrement est un disque magnétique, l'aimantation dans chacune des cellules magnétiques enregistrées telles que $D_1$ à $D_3$ est radiale.

Chaque cellule $D_1$ à $D_3$ est séparée de sa voisine par une transition principale perpendiculaire au sens de défilement F. La transition principale $TP_1$ sépare $D_1$ et $D_2$, la transition $TP_2$ sépare $D_2$ et $D_3$ et la transition $TP_3$ sépare $D_3$ et $D_4$. Ce sont ces transitions principales qui définissent l'emplacement géographique des informations binaires de la piste P du disque.

Si l'état magnétique de l'environnement de la piste P disposé de part et d'autre des bords $B_1$ et $B_2$ de celle-ci est tel que l'aimantation soit opposée à celle des cellules magnétiques enregistrées sur la piste P, celles-ci présentent des transitions latérales disposées sur les bords $B_1$ et $B_2$ à savoir $TL_{11}$ et $TL_{12}$ pour la cellule $D_1$, et $TL_{31}$-$TL_{32}$ pour la cellule $D_3$.

Expérimentalement, on observe que les transitions latérales ont une forme en dents de scie, lesquelles présentent un axe de symétrie confondu avec les bords $B_1$ et $B_2$ de la piste P.

La figure 1b représente un système d'enregistrement transversal selon l'art antérieur $SETA_2$ comportant :

un transducteur magnétique intégré $TMA_2$,

un support d'enregistrement $SMA_2$.

Le transducteur magnétique $SMA_2$ est un transducteur magnétique de type intégré tel que décrit dans les brevets français 2.063.693 déposé le 28 octobre 1969 par la Compagnie Internationale pour l'Informatique et le Commissariat à l'Energie Atomique sous le titre « Tête magnétique intégrée et procédé de fabrication de ladite tête » et le brevet 2.209.154 déposé le 3 juillet 1972 par la même Compagnie sous le titre « Transducteurs magnétiques perfectionnés et leur procédé de fabrication ».

Ce transducteur comprend donc une pièce polaire avant $PAV_2$, une pièce polaire arrière $PAR_2$, entre lesquelles est disposé un bobinage $BOBA_2$. Le transducteur $TMA_2$ comporte un entrefer $GA_2$. Les deux pôles $PAV_2$ et $PAR_2$ sont réalisés en couches magnétiques minces, alors que le bobinage $BOBA_2$ est réalisé sous forme d'un empilement de couches conductrices et isolantes minces.

Le support d'enregistrement $SMA_2$ est strictement identique au support d'enregistrement $SMA_1$ et présente un axe de facile aimantation $AFA_2$ perpendiculaire au sens de défilement des informations F et parallèle à l'axe Oz.

De même que pour le transducteur $TMA_1$, les cellules magnétiques à aimantation transversale sont enregistrées grâce à la composante $H_z$ produite par le pôle $PAR_2$ du transducteur $TMA_2$.

Ainsi qu'il a été indiqué plus haut, seules les cellules magnétiques telles que $D_1$ et $D_3$ munies sur chacun de leur côté coïncidant avec les bords de la piste P, d'une transition latérale $TL_{1.1}$-$TL_{1.2}$ pour la cellule $D_1$ et $TL_{3.1}$-$TL_{3.2}$ pour la cellule $D_3$ produisent un champ magnétique de fuite $H_f$ suffisamment important pour qu'il soit détecté par un transducteur de lecture, les transitions principales telles que $TP_1$, $TP_2$, $TP_3$ ne produisant pas de champ de fuite au voisinage du support. On voit donc bien que si les transitions principales définissent l'emplacement géographique des informations, ce sont les transitions latérales qui permettent leur détection.

Pour le système d'enregistrement $SETA_1$ (ou $SETA_2$) il en résulte les inconvénients suivants, particulièrement mis en évidence à la figure 2 où l'on a représenté trois pistes $P_a$, $P_b$, $P_c$, d'un support magnétique d'enregistrement, tel que le support $SMA_1$ ou le support $SAM_2$, l'environnement magnétique de celles-ci étant totalement quelconque et arbitraire (ce qui est le cas dans la pratique).

L'existence ou non de transitions latérales est fortement dépendante de l'état magnétique antérieur du support d'enregistrement. Or ce dernier est totalement aléatoire de telle sorte que les cellules magnétiques à aimantation transversale enregistrées, par $SETA_1$ (ou $SETA_2$) présentent

ou non des transitions latérales.

Si l'on considère la piste $P_a$ on observe que la cellule $DA_1$ ne comporte pas de transition latérale, que la cellule $DA_2$ comporte deux transitions latérales à savoir $TLA_{2.1}$ et $TLA_{2.2}$, que la cellule $DA_3$ comporte deux transitions latérales à savoir $TLA_{3.1}$ et $TLA_{3.2}$, que la cellule $DA_4$ présente des transitions latérales $TLA_{4.1}$ et $TLA_{4.2}$ qui n'occupent que la moitié de sa longueur (la longueur est la dimension de la cellule mesurée parallèlement au sens de défilement des informations F).

On observe de même que pour la piste $P_b$, la cellule $DB_1$ ne comporte aucune transition latérale, que la cellule $DB_2$ comporte une seule transition latérale $TLB_{2.1}$ sur la moitié seulement de la longueur de la cellule, et qu'enfin la cellule $DB_3$ ne comporte qu'une seule transition latérale à savoir $TLB_{3.2}$, seulement sur la moitié de la longueur de la cellule.

On observe enfin qu'aucune des cellules $DC_1$, $DC_2$, etc....de la piste $P_c$ ne comporte de transition latérale.

On voit donc qu'en ce qui concerne la piste $P_c$, par exemple, aucune des cellules représentées à la figure 2 ne produira de champ magnétique de fuite.

En ce qui concerne la piste $P_b$ l'exploitation des informations sera extrêmement difficile, voire impossible pour la cellule $DB_1$.

En ce qui concerne la piste $P_a$ l'exploitation des informations constituée par les cellules $DA_2$ et $DA_3$ sera correcte.

Le transducteur $TMI_1$ selon l'invention représenté aux figures 3 à 6 remédie aux inconvénients ci-dessus. Il comprend :

une pièce polaire centrale $PCI_1$,

deux pièces polaires auxiliaires latérales $PLI_{1.1}$ et $PLI_{1.2}$,

un bobinage $BOBI_1$.

Le transducteur $TMI_1$ comprend un premier entrefer $ENI_1$ disposé entre la pièce polaire centrale $PCI_1$ et la pièce polaire auxiliaire latérale $PLI_{1.1}$, et un second entrefer $ENI_2$ disposé entre la pièce centrale $PCI_1$ et la pièce auxiliaire latérale $PLI_{1.2}$.

Le transducteur $TMI_1$ est associé à un support d'enregistrement $SMI_1$ analogue aux supports $SMA_1$ et $SMA_2$ (supposés être des disques). On forme ainsi un système d'enregistrement transversal selon l'invention $SETI_1$.

Il enregistre sur ce support, des informations sur des pistes telles que $PI_1$ (voir figures 3, 7a, 7b).

A la figure 3, le support d'enregistrement $SMI_1$ est représenté défilant perpendiculairement au plan de la figure. On désigne respectivement par $TW_{L1}$, $TW$, $TW_{L2}$, $gi_1$, $gi_2$, les largeurs de la pièce auxiliaire latérale $PLI_{1.1}$, de la pièce polaire centrale $PCI_1$, de la pièce auxiliaire latérale $PLI_{1.2}$, (avec $TW_{L1} \simeq TW_{L2}$) de l'entrefer $ENI_1$, de l'entrefer $ENI_2$ (avec $gi_1 \simeq gi_2$). On désigne par e l'épaisseur du transducteur mesurée parallèlement au sens de défilement des informations et par h sa hauteur mesurée perpendiculairement au support d'enregistrement.

Il est clair que plus les dimensions $TW_{L1}$, $gi_1$, TW, $gi_2$, $TW_{L2}$, sont faibles, plus la densité radiale d'informations enregistrées est élevée.

De même, plus l'épaisseur e du transducteur est faible, plus il est possible d'obtenir des densités longitudinales d'informations élevées.

Les figures 4a, 4b, 5 et 6 représentent un premier mode de réalisation préféré $TMI_1$ du transducteur selon l'invention, alors que la figure 4c, représente un second mode de réalisation préféré $TMI_2$ du transducteur magnétique pour enregistrement transversal selon l'invention.

Ainsi qu'on peut le voir aux figures 4a, 4b, 5 et 6, le bobinage $BOBI_1$ comprend d'une part une pluralité n de conducteurs centraux disposés sur le pôle central $PCI_1$ à savoir les conducteurs $CCI_{1.1}$, $CCI_{1.2}$, $CCI_{1.3}$, $CCI_{1.4}$, (donc, ici, n=4) et d'autre part deux conducteurs latéraux $CLI_{1.1}$ et $CLI_{1.2}$ disposés respectivement sur les pôles auxiliaires latéraux $PLI_{1.1}$ et $PLI_{1.2}$. Ces conducteurs sont perpendiculaires au support d'enregistrement et sont disposés sur l'une des faces des pièces polaires perpendiculaires au sens de défilement. Une couche électriquement isolante et amagnétique non représentée pour simplifier les figures 4 à 6 est disposée entre les conducteurs et les pièces polaires centrale et latérales. Il est préférable d'avoir plusieurs conducteurs centraux au lieu d'un, car cela permet d'homogénéiser l'aimantation à l'intérieur de la pièce polaire centrale sur toute sa largeur TW et par suite le champ magnétique d'excitation produit au voisinage de celui-ci. Les conducteurs centraux $CCI_{11}$ et $CCI_{14}$ sont équidistants entre eux et ont de préférence même largeur et même épaisseur (donc même section). Electriquement, ils sont alimentés en parallèle.

Les conducteurs latéraux $CLI_{11}$ et $CLI_{12}$ tels que représentés à la figure 4a, 5 et 6 ont même largeur (à savoir $TW_{L1}$) que les pièces polaires latérales mais il est évident qu'elle peut être inférieure. Par ailleurs, le bobinage $BOBI_1$ comprend un conducteur de retour commun aussi bien aux conducteurs centraux qu'aux conducteurs latéraux, à savoir le conducteur de retour $CRI_1$. Ce dernier est disposé sur la partie inférieure du transducteur et est donc placé en regard du support d'enregistrement. La section de ce conducteur de retour est telle que le champ créé par celui-ci est minimum afin de perturber le moins possible le champ d'écriture. Dans le premier mode de réalisation (transducteur $TMI_1$) on voit que les quatre conducteurs centraux et les deux conducteurs latéraux sont disposés du même côté des trois pièces polaires du transducteur $TMI_1$ c'est-à-dire sur la même face perpendiculaire au sens de défilement et au support d'enregistrement.

En revanche, selon le second mode de réalisation, (transducteur $TMI_2$) chacune des faces des pièces centrale et latérales perpendiculaire au sens de défilement et au support d'enregistrement comprend des conducteurs centraux et latéraux disposés identiquement sur chaque face, d'une manière analogue à la disposition adoptée pour le transducteur $TMI_1$.

Les conducteurs centraux d'une part, et les conducteurs latéraux d'autre part sont connectés électriquement en parallèle.

De préférence, aussi bien le transducteur $TMI_1$ que le transducteur $TMI_2$ sont des transducteurs intégrés et peuvent être fabriqués selon les méthodes utilisées spécialement dans la fabrication des semi-conducteurs.

Le fonctionnement du transducteur selon l'invention sera mieux compris en se référant aux figures 7a et 7b.

On alimente les quatre conducteurs centraux $CCI_{1.1}$ à $CCI_{1.4}$ par un courant I circulant dans le sens indiqué à la figure 4a, les deux conducteurs latéraux $CLI_{1.1}$ et $CLI_{1.2}$ étant alimentés par un courant I' de sens opposé au courant I (pratiquement I' = — 2I). De la sorte, l'aimantation dans la pièce polaire centrale $PCI_1$ est donnée par le vecteur M (voir figures 7a et 7b), alors que l'aimantation dans les pièces polaires auxiliaires latérales est donnée par le vecteur — M' (pratiquement |M'| = |M|). On voit donc que l'aimantation dans la pièce centrale d'une part et dans les deux pièces auxiliaires latérales d'autre part est antiparallèle. Le champ magnétique produit par la pièce centrale $PCI_1$ au niveau du support d'enregistrement $SMI_1$ est $H_c$ (voir figure 7a) alors que les champs magnétiques produits respectivement par les pièces latérales $PLI_{1.1}$ et $PLI_{1.2}$ sont $H_{L1}$ et $H_{L2}$. Le champ $H_c$ d'une part et les champs latéraux $H_{L1}$ et $H_{L2}$ sont anti-parallèles.

Le transducteur $TMI_1$ écrit donc les informations à l'intérieur de pistes telles que $PI_1$ et $PI_2$ de la manière indiquée aux figures 7a et 7b. La pièce polaire centrale $PCI_1$ écrit les cellules centrales $DCI_{1.1}$, $DCI_{1.2}$, $DCI_{1.3}$, $DCI_{1.4}$. La pièce auxiliaire latérale $PLI_1$ écrit les cellules latérales $DLAI_{1.1}$, $DLAI_{1.2}$, $DLAI_{1.3}$, $DLAI_{1.4}$, alors que la pièce auxiliaire latérale $PLI_{1.2}$ écrit les cellules latérales $DLBI_{1.1}$, $DLBI_{1.2}$, $DLBI_{1.3}$, $DLBI_{1.4}$. A la figure 7a ainsi qu'à la figure 7b on a représenté par une flèche le sens des vecteurs aimantation dans chacune des cellules centrales et latérales. On voit ainsi que l'aimantation dans chacune des cellules latérales entourant une même cellule centrale a même sens, ce dernier étant opposé au sens de l'aimantation dans la cellule centrale. Ainsi on voit que l'aimantation dans les deux cellules latérales $DLAI_{1.1}$ et $DLBI_{1.2}$ entourant la cellule centrale $DCI_{1.1}$, a même sens, ce dernier étant opposé au sens d'aimantation dans la cellule centrale $DCI_{1.1}$. Une constatation analogue peut être faite au niveau des cellules latérales $DLAI_{1.2}$ et $DLBI_{1.2}$ et de la cellule centrale $DCI_{1.2}$ et ainsi de suite. On voit également que chacune des cellules centrales $DCI_{1.1}$ à $DCI_{1.4}$ est limitée sur chacun de ses côtés par des transitions latérales ayant une forme de dent de scie. Ainsi la cellule centrale $DCI_{1.1}$ est entourée des deux transitions latérales $TLA_{1.1}$ et $TLB_{1.1}$, le domaine central $DCI_{1.2}$ par les transitions latérales en dent de scie $TLA_{1.2}$ et $TLB_{1.2}$ et la cellule centrale $DCI_{1.3}$ est entourée par les deux transitions latérales $TLA_{1.3}$ et $TLB_{1.3}$ alors que la cellule centrale $DCI_{1.4}$ est entourée par les deux transitions latérales $TLA_{1.4}$ et $TLB_{1.4}$.

Ainsi, on peut dire que la pièce polaire d'écriture centrale se comporte magnétiquement comme un dipôle central, alors que les pièces polaires auxiliaires latérales se comportent comme des dipôles auxiliaires latéraux, ou encore que la pièce polaire centrale comporte un dipôle central, alors que les pièces polaires auxiliaires latérales comportent des dipôles auxiliaires latéraux.

On voit donc que grâce à ces transitions latérales, chacune des cellules centrales $DCI_{1.4}$ produira un champ magnétique de fuite dont l'intensité est suffisante pour produire aux bornes d'un transducteur de lecture un signal exploitable par les circuits électroniques de lecture associés à ce transducteur.

Ainsi qu'on peut le voir à la figure 7b, pour écrire une piste $PI_2$ voisine de la piste $PI_1$, il convient de déplacer le transducteur $TMI_1$ d'une longueur égale à sa largeur totale TTW. La piste $PI_2$ comprend les cellules centrales $DCI_{2.1}$ à $DCI_{2.5}$. Chacune des cellules centrales est entourée par les cellules latérales $DLAI_{2.1}$ à $DLAI_{2.5}$ et $DLBI_{2.1}$ à $DLBI_{2.5}$. On voit donc que chaque piste est séparée de la piste voisine par deux ensembles de cellules latérales. Ainsi la piste $PI_1$ est séparée de la piste $PI_2$ par les deux ensembles de cellules latérales $DLBI_{1.1}$ à $DLBI_{1.5}$ et $DLAI_{2.1}$ à $DLAI_{2.5}$. A la figure 7b, les cellules centrales ont été représentées avec des longueurs variables. On voit également que dans les deux ensembles latéraux $DLBI_{1.1}$-$DLAI_{2.1}$ à $DLBI_{1.5}$-$DLAI_{2.5}$, la distribution des transitions latérales en dent de scie est aléatoire.

En se référant aux figures 3 et 7b, on voit que si l'on veut obtenir des densités radiales extrêmement élevées, il faut d'une part que la largeur TW du pôle central $PCI_1$ soit faible et d'autre part que le rapport $TW/TW_{L1}$ (et $TW/TW_{L2}$) soit élevé. Ainsi on peut avoir au maximum $TW \simeq 2$ microns et $TW_{L1} \simeq TW_{L2} \simeq 1$ micron, $gi_1 \simeq gi_2 \simeq 1\,000$ Å, soit un TTW voisin de 4 microns, ce qui correspond à une densité radiale minimum de 2 500 pistes par centimètre sensiblement supérieure aux densités radiales couramment obtenues actuellement.

Par ailleurs, les ensembles de cellules latérales telles que $DLBI_{1.1}$-$DLAI_{2.1}$ à $DLBI_{1.5}$-$DLAI_{2.5}$ ne sont pas générateurs d'un champ magnétique utile, (champ relatif à une information) mais au contraire d'un champ magnétique parasite. Il importe donc de réduire autant que possible leur largeur.

La largeur des deux entrefers $ENI_1$ et $ENI_2$ joue également un rôle dans la densité radiale obtenue, car elle a une influence sur la largeur des transitions longitudinales en dent de scie. On a donc intérêt à essayer de diminuer autant que possible la largeur $gi_1$ et la largeur $gi_2$.

Les figures 8a et 8b représentent deux têtes $MTMI_1$ et $MTMI_2$ comportant une pluralité de transducteurs selon l'invention.

La tête $MTMI_1$ montrée à la figure 8a comporte une pluralité de transducteurs dont trois seulement sont représentés à la figure 8a, à savoir les trois transducteurs selon l'invention $TMI_{10}$, $TMI_{11}$ et $TMI_{12}$ identiques strictement soit au transducteur $TMI_1$, soit au transducteur $TMI_2$. La figure 8a est une vue de dessus de la tête $MTMI_1$. Le transducteur $TMI_{10}$ est montré avec sa pièce polaire centrale $PCI_{10}$ et ses pièces polaires latérales $PLI_{101}$ et $PLI_{102}$, le transducteur $TMI_{11}$ avec ses pièces polaires centrale $PCI_{11}$ et latérales $PLI_{111}$ et $PLI_{112}$, le transducteur $TMI_{12}$ seulement avec sa pièce latérale $PLI_{121}$, tous ces transducteurs étant alignés suivant l'axe $AXI_1$.

On n'a pas représenté, pour simplifier, les conducteurs centraux et latéraux de chacun des transducteurs $TMI_{10}$ à $TMI_{12}$.

La largeur de chacun des transducteurs est TTW. Ils sont séparés les uns des autres par un isolant électrique amagnétique de largeur TTW. Ainsi les transducteurs $TMI_{10}$ et $TM_{11}$ sont séparés par l'isolant $ISOLI_1$, et les transducteurs $TMI_{11}$ et $TMI_{12}$ par l'isolant $ISOLI_2$.

Ces isolants permettent d'éviter toute diaphonie (interférence entre les champs d'écriture des différents transducteurs) lorsque ceux-ci effectuent des opérations d'écriture. On voit que la tête multitransducteurs $MTMI_1$ permet d'écrire simultanément une piste sur deux.

La tête $MTMI_2$ montrée, vue de dessus à la figure 8b comporte une pluralité de transducteurs dont quatre sont représentés à savoir les transducteurs $TMI_{20}$ à $TMI_{23}$.

Les pièces polaires centrales $PCI_{20}$ à $PCI_{23}$ des transducteurs $TMI_{20}$ à $TMI_{23}$ sont identiques à la pièce polaire centrale $PCI_1$ du transducteur $TMI_1$ (figure 3) et sont alignés sur un même axe $AXI_2$.

Des conducteurs plans centraux $CCI_{201}$ à $CCI_{204}$ pour la pièce centrale $PCI_{20}$, $CCI_{211}$ à $CCI_{214}$ pour la pièce centrale $PCI_{21}$, $PCI_{221}$, à $CCI_{224}$ pour la pièce centrale $PCI_{22}$, $CCI_{231}$ à $CCI_{234}$ pour la pièce centrale $PCI_{23}$, $CCI_{241}$ à $CCI_{244}$ pour la pièce centrale $PCI_{24}$, sont disposés sur chacun des pôles correspondants de la même manière que les conducteurs $CCI_{11}$ à $CCI_{14}$ du bobinage $BOBI_1$ du transducteur $TMI_1$ de la figure 4.

Les pièces polaires latérales $PLI_{201}$-$PLI_{202}$ et $PLI_{221}$-$PLI_{222}$ des transducteurs $TMI_{20}$ et $TMI_{22}$ sont alignées sur un même axe $AXI_3$ parallèle à $AXI_2$ alors que les pièces latérales $PLI_{211}$-$PLI_{212}$ et $PLI_{231}$-$PLI_{232}$ des transducteurs $TMI_{21}$ et $TMI_{23}$ sont alignés sur un même axe $AXI_4$ parallèle à $AXI_2$. Chacune des pièces latérales est identique aux pièces latérales $PLI_{11}$ et $PLI_{12}$ du transducteur $TMI_1$. Des conducteurs latéraux plans $CLI_{201}$-$CLI_{202}$, $CLI_{212}$, $CLI_{221}$-$CLI_{222}$, $CLI_{231}$-$CLI_{232}$ sont disposés sur chacun des pièces latérales $PLI_{201}$-$PLI_{202}$ à $PLI_{231}$-$PLI_{232}$ de la même manière que les conducteurs latéraux $CLI_{11}$ et $CLI_{12}$ sont disposés sur les pièces latérales $PLI_{11}$ et $PLI_{12}$ du transducteur $TMI_1$.

L'ensemble des transducteurs $TMI_{20}$ à $TMI_{23}$ est noyé dans un matériau isolant MISI.

On voit donc que la différence entre chacun des transducteurs $TMI_{20}$ à $TMI_{23}$ est le désalignement entre les pièces centrale et latérales, la distance entre les axes AXI$_2$ et AXI$_3$ d'une part et AXI$_4$ d'autre part étant très faible pratiquement de l'ordre de micron de sorte que le fonctionnement de chacun des transducteurs est analogue au fonctionnement du transducteur TMI$_1$ (ou TMI$_2$).

Le désalignement des pièces centrale et latérales ainsi que la présence de la matière isolante MISI réduit sensiblement la diaphonie entre transducteurs voisins lorsqu'ils écrivent des informations sur le support.

## Revendications

1. Transducteur magnétique pour enregistrer des informations sur au moins une des pistes (PI$_1$, PI$_2$) d'un support (SMI$_1$), les informations de chacune des pistes se présentant sous la forme d'une pluralité de cellules magnétiques dont le vecteur aimantation est sensiblement parallèle au plan du support (SMI$_1$) et est perpendiculaire au sens de défilement du support, comprenant un circuit magnétique formé de plusieurs pièces polaires d'écriture, couplées magnétiquement à un bobinage (BOBI$_1$), caractérisé en ce que les pièces polaires d'écriture sont composées d'un dipôle central (PCI$_1$) disposé entre deux dipôles auxiliaires latéraux (PLI$_{1.1}$ et PLI$_{1.2}$) situés de part et d'autre du dipôle central selon une direction perpendiculaire au sens de défilement du support et parallèle à son plan, chacun des deux dipôles auxiliaires latéraux étant séparés du dipôle central par un entrefer, (ENI$_1$, ENI$_2$), le champ magnétique (Hc) produit par le dipôle central d'une part et les champs magnétiques produits par les dipôles latéraux (H$_{L1}$ et H$_{L2}$) d'autre part étant antiparallèles au niveau du support de sorte que le dipôle central enregistre chaque cellule (DCI$_{11}$ à DCI$_{14}$) dite centrale d'une piste donnée avec un sens d'aimantation donné, les dipôles auxiliaires enregistrant de part et d'autre de cette cellule deux cellules latérales (DLAI$_{11}$ à DLAI$_{14}$ ; DLBI$_{11}$ à DLBI$_{14}$) dont l'aimantation est parallèle et de même sens et est opposée à celle de la cellule centrale, les deux entrefers définissant ainsi deux transitions magnétiques latérales parallèles au sens de défilement des informations, disposées aux deux extrémités de la cellule centrale.

2. Transducteur selon la revendication 1 caractérisé en ce qu'il est de type intégré.

3. Transducteur selon la revendication 2 caractérisé en ce que le bobinage comprend :

1. une pluralité de conducteurs (CCI$_{11}$ à CCI$_{14}$), centraux plans parallèles entre eux et perpendiculaires au support et au sens de défilement des informations, déposés sur la pièce polaire centrale,

2. au moins un conducteur plan latéral perpendiculaire au support et au sens de défilement des informations déposé sur chaque pièce polaire latérale (CLI$_{11}$, CLI$_{12}$).

4. Méthode d'enregistrement d'informations sur au moins une piste d'un support (SMI$_1$) au moyen d'un transducteur (TMI$_1$), les informations de chaque piste (PI$_1$, PI$_2$), se présentant sous la forme d'une succession de cellules élémentaires dont le vecteur aimantation est sensiblement parallèle au support et est perpendiculaire au sens de défilement (F) du support caractérisé en ce qu'il consiste à utiliser un transducteur ayant un dipôle central d'écriture (PCI$_1$) disposé entre deux dipôles auxiliaires latéraux (PLI$_{11}$ et PLI$_{12}$) situés de part et d'autre du dipôle central selon une direction perpendiculaire au sens de défilement du support et parallèle à son plan, chacun des deux dipôles auxiliaires latéraux étant séparés du dipôle central par un entrefer, (ENI$_1$, ENI$_2$) le champ magnétique (Hc) produit par le dipôle central d'une part et les champs magnétiques produits par les dipôles latéraux (H$_{L1}$ et H$_{L2}$) d'autre part étant antiparallèles au niveau du support de sorte que l'on enregistre de part et d'autre de chaque cellule dite centrale (DCI$_{11}$, DCI$_{14}$) d'une piste donnée (PI$_1$, PI$_2$) deux cellules latérales (DLAI$_{11}$-DLBI$_{11}$ à DLAI$_{14}$-DLBI$_{14}$) dont l'aimantation est parallèle et de même sens et est opposée à celle de la cellule centrale, la frontière entre chaque cellule latérale et la cellule centrale définissant une transition magnétique latérale parallèle au sens de défilement.

5. Méthode d'enregistrement selon la revendication 4, caractérisé en ce que le support présente dans son plan un axe de facile aimantation (AFI$_1$) perpendiculaire au sens de défilement du support devant le transducteur.

6. Système d'enregistrement transversal d'informations comprenant :

un transducteur comportant un circuit magnétique formé de plusieurs pièces polaires d'écriture couplées magnétiquement à un bobinage (BOBI$_1$),

un support (SMI$_1$) où l'on enregistre au moins une piste (PI$_1$, PI$_2$), les informations de chacune des pistes se présentant sous la forme d'une pluralité de cellules magnétiques dont le vecteur aimantation est sensiblement parallèle au plan du support (SMI$_1$) et est perpendiculaire au sens de défilement (F) du support (SMI$_1$),

caractérisé en ce que, le support présentant dans son plan une direction de facile aimantation (AFI$_1$) perpendiculaire au sens de défilement (F), la pièce polaire décriture est un dipôle d'écriture central (PCI$_1$) disposé entre deux dipôles d'écriture auxiliaires latéraux (PLI$_{1.1}$ et PLI$_{1.2}$) situés de part et d'autre du dipôle central selon une direction perpendiculaire au sens de défilement du support et parallèle à son plan, chacun des deux dipôles auxiliaires latéraux étant séparés du dipôle central par un entrefer (ENI$_1$, ENI$_2$), le champ magnétique (Hc) produit par le dipôle central d'une part et les champs magnétiques produits par les dipôles latéraux (H$_{L1}$ et H$_{L2}$) d'autre part étant antiparallèles au niveau du support de sorte que le dipôle central enregistre chaque cellule (DCI$_{11}$ à DCI$_{14}$) dite centrale d'une piste donnée avec un sens d'aimantation donné, les dipôles auxiliaires enregistrant de part et d'autre de cette cellule deux cellules latérales (DLAI$_{11}$ à DLAI$_{14}$ ; DLBI$_{11}$ à DLBI$_{14}$) dont l'aimantation est parallèle et de même sens et est opposée à celle de la cellule centrale, les deux entrefers définissant ainsi deux transitions magnétiques latérales parallèles au sens de défilement des informations, disposées aux deux extrémités de la cellule centrale.

## Claims

1. A magnetic transducer for recording data on at least one of the tracks $(PI_1, PI_2)$ of a carrier $(SMI_1)$, the data of each of the tracks appearing in the form of a plurality of magnetic cells the magnetization vector of which is substantially parallel to the plane of the carrier $(SMI_1)$ and is perpendicular to the run-past direction of the carrier, comprising a magnetic circuit formed by several writing pole pieces coupled magnetically with a coil $(BOBI_1)$, characterized in that the writing pole pieces comprise a central dipole $(PCI_1)$ disposed between two auxiliary lateral dipoles $(PLI_{1.1}$ and $PLI_{1.2})$ situated at either side of the central dipole along a direction perpendicular to the run-past direction of the carrier and parallel to its· plane, each of the two auxiliary lateral dipoles being separated from the central dipole by an air gap $(ENI_1, ENI_2)$, the magnetic field generated $(Hc)$ by the central dipole on the one hand and the magnetic fields generated by the lateral dipoles $(H_{L1}$ and $H_{L2})$ on the other hand being antiparallel at the level of the carrier so that the central dipole records each so-called central cell $(DCI_{11}$ to $DCI_{14})$ of a given track with a given direction of magnetization, the auxiliary dipoles recording at either side of this cell two lateral cells $(DLAI_{11}$ to $DLAI_{14}$; $DLBI_{11}$ to $DLBI_{14})$ the magnetization of which is parallel and of the same direction and is opposed to that of the central cell, the two air gaps thus defining two lateral magnetic transitions parallel to the data run-past direction, disposed at the two ends of the central cell.

2. A transducer according to claim 1, characterized in that it is of the integrated type.

3. A transducer according to claim 2, characterized in that the coil comprises :
   1. a plurality of central plane conductors $(CCI_{11}$ to $CCI_{14})$ which are parallel to one another and perpendicular to the carrier and to the data run-past direction, disposed on the central pole piece,
   2. at least one plane lateral conductor perpendicular to the carrier and to the data run-past direction, disposed on each lateral pole piece $(CLI_{11}, CLI_{12})$.

4. A method of recording data on at least one track of a carrier $(SMI_1)$ by means of a transducer $(TMI_1)$, the data of each track $(PI_1, PI_2)$ appearing in the form of a succession of elementary cells the magnetization vector of which is substantially parallel to the carrier and is perpendicular to the run-past direction (F) of the carrier, characterized in that it consists in utilising a transducer incorporating a central writing dipole $(PCI_1)$ disposed between two lateral auxiliary dipoles $(PLI_{11}$ and $PLI_{12})$ situated at either side of the central dipole along a direction perpendicular to the carrier run-past direction and ·parallel to its plane, each of the two lateral auxiliary dipoles being separated from the central dipole by an air gap $(ENI_1, ENI_2)$, the magnetic field $(Hc)$ generated by the central dipole on the one hand and the magnetic fields generated by the lateral dipoles $(H_{L1}$ and $H_{L2})$ on the other hand being antiparallel at the level of the carrier so that at either side of each so-called central cell $(DCI_{11}, DCI_{14})$ of a given track $(PI_1, PI_2)$ there are recorded two lateral cells $(DLAI_{11}$-$DLBI_{11}$ to $DLAI_{14}$-$DLBI_{14})$ the magnetization of which is parallel and of the same direction and is opposed to that of the central cell, the boundary between each lateral cell and the central cell defining a lateral magnetic transition parallel to the run-past direction.

5. A recording method according to claim 4, characterized in that the carrier has an axis $(AFI_1)$ of easy magnetization in its plane, which is perpendicular to the direction of passage of the carrier before the transducer.

6. A system for transverse data recording comprising :
   a transducer comprising a magnetic circuit formed by several writing pole pieces coupled magnetically with a coil $(BOBI_1)$,
   a carrier $(SMI_1)$ whereon is recorded at least one track $(PI_1, PI_2)$, the data of each of the tracks appearing in the form of a plurality of magnetic cells the magnetization vector of which is substantially parallel to the plane of the carrier $(SMI_1)$ and is perpendicular to the run-past direction (F) of the carrier $(SMI_1)$,
   characterized in that, the carrier having a direction $(AFI_1)$ of easy magnetization in its plane which is perpendicular to the run-past direction (F), the writing pole piece is a central writing dipole $(PCI_1)$ disposed between two auxiliary lateral writing dipoles $(PLI_{1.1}$ and $PLI_{1.2})$ situated at either side of the central dipole along a direction which is perpendicular to the carrier run-past direction and parallel to its plane, each of the two auxiliary lateral dipoles being separated from the central dipole by an air gap $(ENI_1, ENI_2)$, the magnetic field $(Hc)$ generated by the central dipole on the one hand and the magnetic fields generated by the lateral dipoles $(H_{L1}$ and $H_{L2})$ on the other hand being antiparallel at the level of the carrier so that the central dipole records each so-called central cell $(DCI_{11}$ to $DCI_{14})$ of a given track with a given direction of magnetization, the auxiliary dipoles recording at either side of this cell two lateral cells $(DLAI_{11}$ to $DLAI_{14}$ ; $DLBI_{11}$ to $DLBI_{14})$ the magnetization of which is parallel and of the same direction and is opposed to that of the central cell, the two air gaps thus defining two lateral magnetic transitions parallel to the data run-past direction, disposed at the two ends of the central cell.

## Patentansprüche

1. Magnetischer Wandler zur Aufzeichnung von Informationen auf wenigstens einer der Spu-

ren (PI$_1$, PI$_2$) eines Trägers (SMI$_1$), wobei die Informationen jeder Spur in Form einer Vielzahl magnetischer Zellen vorhanden sind, deren Magnetisierungsvektor zu der Ebene des Trägers (SMI$_1$) im wesentlichen parallel ist und zu der Vorbeilaufrichtung des Trägers senkrecht ist, mit einem Magnetkreis, der aus mehreren Schreib-Polteilen besteht, die an eine Wicklung (BOBI$_1$) magnetisch angekoppelt sind, dadurch gekennzeichnet, daß die Schreib-Polteile aus einem Zentraldipol (PCI$_1$) bestehen, der zwischen zwei seitlichen Hilfsdipolen (PLI$_{1.1}$ und PLI$_{1.2}$) angeordnet ist, welche beiderseits des Zentraldipols längs einer zur Vorbeilaufrichtung des Trägers senkrechten und zu seiner Ebene parallelen Richtung liegen, wobei jeder dieser beiden seitlichen Hilfsdipole durch einen Eisenspalt (ENI$_1$, ENI$_2$) von dem Zentraldipol getrennt ist, wobei das durch den Zentraldipol erzeugte Magnetfeld (Hc) einerseits und die durch die seitlichen Dipole (H$_{L1}$ und H$_{L2}$) erzeugten Magnetfelder andererseits auf Höhe des Trägers antiparallel sind, so daß der Zentraldipol jede als zentral bezeichnete Zelle (DCI$_{11}$ bis DCI$_{14}$) einer bestimmten Spur mit einer bestimmten Magnetisierungsrichtung aufzeichnet, wobei die Hilfsdipole beiderseits dieser Zelle zwei seitliche Zellen (DLAI$_{11}$ bis DLAI$_{14}$ ; DLBI$_{11}$ bis DLBI$_{14}$) aufzeichnen, deren Magnetisierung parallel und von gleicher Richtung ist sowie entgegengesetzt zu der Zentralzelle ist, wobei die beiden Eisenspalte auf diese Weise zwei seitliche magnetische Übergänge bilden, welche zu der Vorbeilaufrichtung der Informationen parallel sind und die an beiden Enden der Zentralzelle liegen.

2. Wandler nach Anspruch 1, dadurch gekennzeichnet, daß er vom integrierten Typ ist.

3. Wandler nach Anspruch 2, dadurch gekennzeichnet, daß die Wicklung umfaßt :

1. eine Vielzahl von ebenen Zentralleitern (CCI$_{11}$ bis CCI$_{14}$), die zueinander parallel sind und zu dem Träger sowie der Vorbeilaufrichtung der Informationen senkrecht stehen, welche auf dem zentralen Polteil angebracht sind,

2. wenigstens einen ebenen seitlichen Leiter, welcher zu dem Träger sowie zu der Vorbeilaufrichtung der Informationen senkrecht steht und auf jedem seitlichen Polteil (CLI$_{11}$, CLI$_{12}$) angebracht ist.

4. Verfahren für die Aufzeichnung von Informationen auf wenigstens einer Spur eines Trägers (SMI$_1$) mittels eines Wandlers (TMI$_1$), wobei die Informationen jeder Spur (PI$_1$, PI$_2$) in Form einer Folge elementarer Zellen vorhanden sind, deren Magnetisierungsvektor zu dem Träger im wesentlichen parallel und zu der Vorbeilaufrichtung (F) des Trägers senkrecht ist, dadurch gekennzeichnet, daß es darin besteht, einen Wandler mit einem zentralen Schreib-Dipol (PCI$_1$) zu verwenden, der zwischen zwei seitlichen Hilfsdipolen (PLI$_{11}$ und PLI$_{12}$) angeordnet ist, welche beiderseits des Zentraldipols längs einer zu der Vorbeilaufrichtung des Trägers senkrechten und zu seiner Ebene parallelen Richtung liegen, wobei jeder der beiden seitlichen Hilfsdipole durch einen Eisenspalt (ENI$_1$, ENI$_2$) von dem zentralen Dipol getrennt ist, wobei das von dem zentralen Dipol erzeugte Magnetfeld (Hc) einerseits und die von den seitlichen Dipolen (H$_{L1}$ und H$_{L2}$) erzeugten Magnetfelder andererseits auf Höhe des Trägers antiparallel sind, so daß beiderseits jeder als zentral bezeichneten Zelle (DCI$_{11}$, DCI$_{14}$) einer bestimmten Spur (PI$_1$, PI$_2$) zwei seitliche Zellen (DLAI$_{11}$-DLBI$_{11}$ bis DLAI$_{14}$-DLBI$_{14}$) aufgezeichnet werden, deren Magnetisierung parallel und von gleicher Richtung ist sowie zu derjenigen der zentralen Zelle entgegengesetzt ist, wobei die Grenze zwischen jeder seitlichen Zelle und der zentralen Zelle einen seitlichen magnetischen Übergang bildet, der zu der Vorbeilaufrichtung parallel ist.

5. Verfahren zur Aufzeichnung nach Anspruch 4, dadurch gekennzeichnet, daß die Ebene des Trägers eine Achse mit leichter Magnetisierung (AFI$_1$) aufweist, welche zu der Vorbeilaufrichtung des Trägers vor dem Wandler senkrecht ist.

6. System zur transversalen Aufzeichnung von Informationen, mit :

einem einen Magnetkreis umfassenden Wandler, der aus mehreren Schreib-Polteilen gebildet ist, welche an eine Wicklung (BOBI$_1$) magnetisch angekoppelt sind,

einem Träger (SMI$_1$), auf welchem wenigstens eine Spur (PI$_1$, PI$_2$) aufgezeichnet wird, wobei die Informationen jeder der Spuren in Form einer Mehrzahl magnetischer Zellen vorhanden sind, deren Magnetisierungsvektor zu der Ebene des Trägers (SMI$_1$) im wesentlichen parallel ist und zu der Vorbeilaufrichtung (F) des Trägers (SMI$_1$) senkrecht ist, dadurch gekennzeichnet, daß - da die Ebene des Trägers eine Richtung leichter Magnetisierung (AFI$_1$) aufweist, welche zu der Vorbeilaufrichtung (F) senkrecht ist - der Schreib-Polteil ein zentraler Schreib-Dipol (PCI$_1$) ist, der zwischen zwei seitlichen Schreib-Hilfsdipolen (PLI$_{1.1}$ und PLI$_{1.2}$) angeordnet ist, welche beiderseits des zentralen Dipols längs einer zu der Vorbeilaufrichtung des Trägers senkrechten und zu seiner Ebene parallelen Richtung liegen, wobei jeder der beiden seitlichen Hilfsdipole durch einen Eisenspalt (ENI$_1$, ENI$_2$) vom zentralen Dipol getrennt ist, wobei das von dem zentralen Dipol erzeugte Magnetfeld (Hc) einerseits und die von den seitlichen Dipolen (H$_{L1}$ und H$_{L2}$) erzeugten Magnetfelder andererseits auf Höhe des Trägers antiparallel sind, so daß der zentrale Dipol jede als zentral bezeichnete Zelle (DCI$_{11}$ bis DCI$_{14}$) einer bestimmten Spur mit einer bestimmten Magnetisierungsrichtung aufzeichnet, wobei die Hilfsdipole beiderseits dieser Zelle zwei seitliche Zellen (DLAI$_{11}$ bis DLAI$_{14}$ ; DLBI$_{11}$ bis DLBI$_{14}$) aufzeichnen, deren Magnetisierung parallel und von gleicher Richtung ist sowie zu derjenigen der zentralen Zelle entgegengesetzt ist, wobei die beiden Eisenspalte so zwei seitliche magnetische Übergänge bilden, die zu der Vorbeilaufrichtung der Informationen parallel sind und an, beiden Enden der zentralen Zellen liegen.

FIG.1a

FIG.1b

FIG.2

FIG. 3

PLI₁₁    SETI₁₁    PCI₁    TMI₁    PLI₁₂

1    2    3    h

ENI₁    ENI₂

TWL1    TW    TWL2

gi₁    gi₂

PI₁    SMI₁

BOBI₁

PLI₁₁    PCI₁  CCI₁₃    PLI₁₂

CLI₁₁    CCI₁₁    CCI₁₂    CCI₁₄    CLI₁₂

I'    I    I    I    I    I'    TMI₁

CRI₁

FIG. 4a

TMI₁    CCI₁₂

I

PCI₁

⊗

CRI₁

FIG. 4b

TMI2    CCI₂₂

PCI₂

I    I

⊗

CRI₂

FIG. 4c

FIG.5

FIG.6

FIG. 7a

TTW

PLI$_{11}$      PCI$_1$      PLI$_{12}$    TMI$_1$

$-\overrightarrow{M}$      $\overrightarrow{M}$      $-\overrightarrow{M}$

F

HL$_1$      $\overrightarrow{H_c}$      HL2

DLAI$_{14}$    TLA14    TLB$_{14}$    DLBI$_{14}$

DCI$_{14}$

DLAI$_{13}$    TLB$_{13}$    DLBI$_{13}$

TLA$_{13}$    DCI$_{13}$

DLAI$_{12}$    TLA$_{12}$    TLB$_{12}$    DLBI$_{12}$

DCI$_{12}$

DLAI$_{11}$    DLBI$_{11}$

DCI$_{11}$

TLA$_{11}$    PI$_1$    TLB$_{11}$    SMI$_1$

AFI$_1$

EP 0 188 943 B1

FIG. 7b

FIG.8a

$TMI_{10}$

$TTW$

$TMI_{11}$

$TMI_{12}$

$ISOLI_1$

$ISOLI_2$

$PLI_{101}$   $PCI_{10}$   $PLI_{102}$   $AXI_1$   $PLI_{111}$   $PCI_{11}$   $PLI_{112}$   $PLI_{121}$

$MTMI_1$

FIG.8b

$TMI_{20}$

$TMI_{22}$

$MISI$

$PLI_{201}$   $PLI_{202}$   $PLI_{221}$   $PLI_{222}$

$AXI_3$

$PCI_{20}$   $PCI_{21}$   $PCI_{22}$   $PCI_{23}$

$AXI_2$

$CLI_{201}$   $CLI_{202}$   $CLI_{221}$   $CLI_{222}$

$CCI_{201}$ à $CCI_{204}$   $CCI_{211}$ à $CCI_{214}$   $CCI_{221}$ à $CCI_{224}$   $CCI_{231}$ à $CCI_{234}$

$AXI_4$

$MTMI_2$   $PLI_{211}$   $CLI_{211}$   $TMI_{21}$   $CLI_{212}$ $PLI_{212}$   $PLI_{231}$   $CLI_{231}$   $TMI_{23}$   $CLI_{232}$ $PLI_{232}$